**Europäisches Patentamt**

**European Patent Office**

**Office européen des brevets**

(19)

(11) Veröffentlichungsnummer: **0 193 195**
**B1**

(12) **EUROPÄISCHE PATENTSCHRIFT**

(45) Veröffentlichungstag der Patentschrift:
02.05.90

(51) Int. Cl.⁴: **G01B 3/10**

(21) Anmeldenummer: **86102560.9**

(22) Anmeldetag: **27.02.86**

(54) **Messband.**

(30) Priorität: **28.02.85 DE 3507044**

(43) Veröffentlichungstag der Anmeldung:
**03.09.86 Patentblatt 86/36**

(45) Bekanntmachung des Hinweises auf die Patenterteilung:
**02.05.90 Patentblatt 90/18**

(84) Benannte Vertragsstaaten:
**FR GB IT**

(56) Entgegenhaltungen:
**DE-A- 3 008 353**
**GB-A- 2 045 937**
**US-A- 3 473 235**

(73) Patentinhaber: **Meywald, Volker, Dipl.-Ing.,
Finkenweg 19, D-3548 Arolsen(DE)**

(72) Erfinder: **Meywald, Volker, Dipl.-Ing., Finkenweg 19,
D-3548 Arolsen(DE)**

(74) Vertreter: **Patentanwälte Dipl.-Ing. Rudolf Bibrach
Dipl.-Ing. Elmar Rehberg, Postfach 1453 Pütterweg 6,
D-3400 Göttingen(DE)**

## Beschreibung

Die Erfindung bezieht sich auf ein Meßband mit einem mit einer Maßeinteilung versehenen Bandstreifen, mit einem an dessen Anfang befestigten Beschlag, mit am Beschlag angeordneten Abgleitflächen, und mit einem am Beschlag vorgesehenen Griff, der an seinem beschlagseitigen Ende ein die Sicht auf die Meßstelle und die Nullmarke am Anfang des Bandstreifens oder des Beschlags gestattendes Fenster aufweist, wobei der Griff aus einer Lage in Bandverlängerungsrichtung mindestens einseitig um etwa 180° um eine Achse schwenkbar am Beschlag gelagert ist.

Ein Meßband mit den im Oberbegriff angegebenen Merkmalen ist aus der DE-A-30 08 353 bekannt. Der Beschlag ist dabei reiterartig auf den Bandanfang aufgesetzt, wobei die Nullmarke des Bandstreifens sichtbar ist. Auch die Meßstelle kann sowohl bei Außenmessung als auch bei Innenmessung beobachtet und in entsprechende Deckung mit der Nullmarke gebracht werden. Hierzu dient ein am Griff angebrachtes Fenster, welches eine Ausnehmung des Griffs darstellt, die sich von der Nullmarke des Beschlags in Richtung auf das freie Ende des Griffs um einen größeren Betrag erstreckt, als es lediglich für die schwenkbare Lagerung des Griffs am Beschlag erforderlich ist. Die Achse für die Schwenklagerung des Griffs wird von zwei Achsstummeln an dem Beschlag realisiert, die relativ nahe bei der Nullmarke des Beschlags angeordnet sind. Griff und Beschlag überdecken sich nur soweit, wie dies für die Lagerung des Griffs am Beschlag erforderlich ist. Dies bedeutet wiederum, daß die dem Beschlag zugekehrten Enden des Griffs über die Achse hinaus nicht allzu weit ausladend gestaltet werden können, weil ja bei einer Innenmessung diese Enden über die Nullmarke nicht vorstehen dürfen. Der Beschlag kann Abgleitflächen aufweisen, die dazu dienen, das Hängenbleiben eines durch das Gelände gezogenen Bandendes an Hindernissen möglichst zu verhindern. Diese Abgleitflächen sind an keilförmigen Vorsprüngen des Beschlags vorgesehen und können das Umschlagen des Griffs um die erwähnten 180° behindern. Einen Winkelbeschlag weist dieses Meßband nicht auf.

Aus der DE-C-13 03 752, der US-A-3 473 235 und der DE-C-19 27 994 ist jeweils ein Meßband mit einem Beschlag, einem offenen Zuggriff und einem Winkelbeschlag bekannt, wobei der Winkelbeschlag aus einer Ruheposition, in welcher er sich im wesentlichen parallel zu dem Beschlag des Meßbands befindet, in eine um 90° davon verschiedene Gebrauchsposition verschwenkbar ist. Ein solcher Winkelbeschlag dient bekanntlich dazu, das Meßband mit seinem Bandanfang bei einer Außenmessung auf den zu messenden Gegenstand aufzusetzen und dort zu fixieren. Der Winkelbeschlag ersetzt den Meßbandgehilfen, der ansonsten üblicherweise den Bandanfang handhabt. Ein solcher Winkelbeschlag weist in Richtung auf den Bandstreifen vorstehende Krallen, Spitzen o. dgl. auf, um sich an dem zu messenden Gegenstand verhaken zu können, wenn er entsprechend angedrückt wird und eine Zugkraft auf den Bandstreifen während der Messung wirkt. Bei diesem bekannten Meßband ist eine einzige Achse relativ nahe an der Null-Marke des Beschlages vorgesehen, um die sowohl der Zuggriff, wie auch der Winkelbeschlag schwenkbar gelagert sind. Dies erbringt den Vorteil, daß der Winkelbeschlag mit seinen der Lagerung dienenden Umbiegungen in seiner Höhe verhältnismäßig klein gehalten werden kann, so daß dieser Winkelbeschlag, auch wenn er z. B. bei einer Innenmessung nicht gebraucht wird, nicht störend in Erscheinung tritt. Nachteilig ist bei dem bekannten Meßband, daß die gemeinsame Achse den Beschlag des Meßbandes in der Breite relativ weit überragt, weil ja zunächst die Umbiegungen des Winkelbeschlages und sodann die beiden Enden des Griffes auf dieser Achse gelagert werden müssen. Dies bedeutet wiederum, daß sich an diesen Stellen Ansatzpunkte für das Hängenbleiben des Bandes beim Ziehen durch das Gelände ergeben können. Abgleitflächen sind hier weder am Beschlag noch sonstwo vorgesehen. Der Zuggriff ist offen ausgebildet, wobei die Öffnung im Vergleich zum Bandstreifen vorn verbreitert ist, sodaß ein Finger hakenartig durch die Öffnung gesteckt und die Zugkraft bei Außenmessungen aufgebracht werden kann.

In der am 23.01.1986 veröffentlichten Patentanmeldung DE-A-34 47 200.2 ist ein Meßband vorgeschlagen, bei dem der Griff zwecks besserer Anbringung einer Zug- bzw. Druckkraft bei Außenbzw. Innenmessung außen mit Verbreiterungen versehen ist. Im Anschluß an die Verbreiterungen werden Fingermulden geschaffen, um den Griff als Zuggriff bzw. Druckgriff besser ergreifen zu können. Auch dieser Griff weist ein Fenster zur Beobachtung der Null-Marke und des Meßgegenstandes auf. Dieses Fenster kann sich in schmalen Spalten in Richtung auf die Achse des Beschlages zuggriffseitig fortsetzen, um die beim Umschlagen des Griffes um die Achse zu überwindende Reibung zu reduzieren. Die dem Beschlag zugekehrten freien Enden des Griffes können abgeschrägt ausgebildet sein, um ein gefälligeres Aussehen des Griffes zu erreichen.

Der Erfindung liegt die Aufgabe zugrunde, ein Meßband der eingangs beschriebenen Art so weiterzubilden, daß es auch einen Winkelbeschlag aufweist und dessen Beschlag und Griff so aufeinander abgestimmt gestaltet sind, daß keine Absätze auftreten, an denen das Bandende beim Ziehen des Bandes durch das Gelände bzw. beim Aufrollen hängenbleiben könnte.

Erfindungsgemäß wird dies dadurch erreicht, daß das Fenster im Bereich der Nullmarke durch Freiräume in Bezug auf den Beschlag und den Bandstreifen seitlich verbreitert ist, daß auch der Griff Abgleitflächen aufweist, die die Abgleitflächen am Beschlag ergänzen, und daß ein Winkelbeschlag um eine möglichst nahe am Anfang des Beschlags angeordnete und separat von der Achse des Griffs vorgesehene Klappachse schwenkbar gelagert ist, wobei die Klappachse näher an der Nullmarke angeordnet ist als die Achse des Griffs.

Die Anordnung der Abgleitflächen erstreckt sich somit nicht nur auf den Beschlag, sondern erfaßt auch den Griff, wobei die beiden Abgleitflächen an den Teilen aneinander ergänzen, also die eine Abgleitfläche die andere Abgleitfläche fortsetzt. Jedenfalls sind die Abgleitflächen so relativ zueinander vorgesehen, daß Absätze, an denen das Bandende beim Ziehen durch das Gelände hängenbleiben könnte, möglichst vermieden sind. Die Anordnung der Abgleitfläche am Griff erfordert es jedoch, die über die Achse vorstehenden Enden des Griffs vergleichsweise lang zu gestalten, was wiederum bedingt, daß die Achse des Griffs am Beschlag nicht im Bereich der Nullmarke angeordnet werden kann, weil sonst bei einer Innenmessung die freien Enden des Griffs durch Überstehen über die Nullmarke hinaus eine solche Messung behindern würden. Außerdem würde dies bedingen, daß die Abgleitflächen bzw. die Vorsprünge am Beschlag, an denen die Abgleitflächen vorgesehen sind, sehr weit ausladen müßten, weil sie praktisch nahezu die gesamte Breite, die durch die Grifflagerung am Beschlag erforderlich ist, überbrücken müßten. Dies wiederum zieht es nach sich, daß das an die Nullmarke anschließende Fenster relativ breit gestaltet werden müßte, wodurch der Griff in diesem Bereich ebenfalls breit ausgebildet werden müßte. Gemäß der Erfindung sind die Abgleitflächen sowohl am Beschlag wie auch am Griff vorgesehen und überbrücken jeweils etwa zur Hälfte die durch die Grifflagerung anwachsende Breite. Hierdurch ist es möglich, das Fenster durch Freiräume zu verbreitern, die sich an das bekannte Fenster im Bereich der Nullmarke seitlich anschließen. Diese Freiräume sind auch bei einer Außenmessung insoweit dienlich, als die Nullmarke des Beschlags und die Kante des zu messenden Gegenstands besser und einfacher zur Deckung gebracht werden können. Der Winkelbeschlag ist nicht um die Achse des Griffs schwenkbar gelagert, sondern bekommt seine eigene Klappachse, die vergleichsweise näher am Anfang des Beschlags angeordnet wird, damit der Winkelbeschlag hinsichtlich seiner Umbiegungen, die für seine Lagerung erforderlich sind, eine möglichst geringe Bauhöhe erhält.

Außerdem wird die Addition einer Verbreiterung durch die Lagerung des Griffs und die des Winkelbeschlags, wie es im Stand der Technik unumgänglich ist, vermieden. Durch die getrennt angeordneten Achsen wird es auch möglich, daß der Winkelbeschlag ohne Beschädigung der Achse des Griffs entfernt werden kann, wenn der Benutzer des Meßbands glaubt, für seinen speziellen Anwendungsfall keinen Winkelbeschlag benutzen zu müssen. Die getrennte Lagerung von Winkelbeschlag und Griff ermöglicht es weiterhin, die für die Teile am geeignetsten erscheinenden Werkstoffe frei zu wählen. So kann beispielsweise der Beschlag einschließlich der für die Grifflagerung erforderlichen Achsstummel aus Kunststoff gespritzt werden. Der Winkelbeschlag wird vorzugsweise aus Metallblech hergestellt, um einmal schmal zu bauen und zum anderen die Krallen, Spitzen o. dgl. dauerhaft auszubilden, die für seine Anwendung erforderlich sind. Ein solches Metallteil würde bei seiner Klappbewegung die aus Kunststoff bestehenden Achsstummel der Grifflagerung in vergleichsweise kurzer Zeit zerstören.

Die Freiräume können so ausgebildet sein, daß sie in umgeschlagenem Zustand des Griffs Vorsprünge, an denen die beschlagseitigen Abgleitflächen angeordnet sind, aufnehmen. Die Vorsprünge und die daran vorgesehenen Abgleitflächen behindern also den Umschlagvorgang des Griffs, wie er für eine Innenmessung erforderlich ist, nicht.

Die Achse des Griffs kann von der Nullmarke in Richtung auf den Bandstreifen in etwa 6 mm zurückversetzt angeordnet und in bekannter Weise von Achsstummeln am Beschlag gebildet sein. Das Maß der Zurückversetzung richtet sich nach der Lagerausbildung im einzelnen, sollte jedoch mindestens in der Größenordnung der etwa 6 mm liegen. Dadurch wird es möglich, den Durchmesser der Achsstummel so zu dimensionieren, daß sie für die Aufbringung der Spannkraft des Bandstreifens während der Messung ausreichend bemessen sind. Gleichzeitig wird die separate Achse des Winkelbeschlags durch die Zurückversetzung der Achse des Griffs zugänglich.

Die Freiräume am Griff können sich über den Anfang des Beschlages hinaus seitlich in Richtung der Achse erstrecken. Damit werden nicht nur Spalte für die Ermöglichung des Umschlagens des Griffes gebildet, sondern tatsächlich Freiräume, durch die hindurch die Kante des zu vermessenden Gegenstandes durch Peilung beobachtet werden kann. Damit wird der Nachteil behoben, daß die Kante des Gegenstandes, sofern sie unter dem Beschlag hinter der Null-Marke verschwindet, nicht mehr sichtbar ist.

Der Beschlag kann im Bereich der Null-Marke Ausnehmungen aufweisen, in denen Umbiegungen des Winkelbeschlags auf der den Beschlag durchsetzenden Klappachse gelagert sind. Hierdurch wird eine Verbreiterung des Bandstreifens durch die Anordnung des Winkelbeschlages vermieden und die sich seitlich anschließenden Freiräume können voll genutzt werden.

Der Beschlag und der Griff können aus Kunststoff, der Winkelbeschlag und dessen Klappachse aus Metall bestehen. Die Klappachse ist zweckmäßig durchgehend angeordnet und besteht aus einem Metallbolzen. Der Winkelbeschlag wird aus Metallblech hergestellt. Er besitzt nur innerhalb seines Umrisses vorspringende Krallen, Spitzen o. dgl., um einerseits seine Funktion erfüllen zu können, andererseits eine Verletzungsgefahr beim Aufrollen des Meßbandes möglichst zu vermindern. Die Krallen, Spitzen o. dgl. sind im Bereich von randgeschlossenen Durchbrechungen angeordnet und bestehen im wesentlichen nur aus Blechdurchzügen geringer Erstreckung, aber vergleichsweise scharfer Ausbildung. Diese Krallen können sich in der Ruheposition des Winkelbeschlages in das Material des Beschlages ohne Nachteil eindrücken. Die dem Winkelbeschlag zugekehrte Kante des Beschlages kann so ausgebildet sein, daß auf den Winkelbeschlag ein Schnapp- bzw. Rasteffekt zur Sicherung der Ruheposition einerseits und der Gebrauchsposition andererseits erreicht wird.

Die Erfindung wird anhand bevorzugter Ausführungsbeispiele weiter beschrieben. Es zeigen:

Figur 1   eine Draufsicht auf eine erste Ausführungsform des Meßbandanfangs,

Figur 2   eine Draufsicht auf den Meßbandanfang gemäß Figur 1 mit um etwa 180° umgeschlagenen Griff,

Figur 3   eine Schnittdarsstellung gemäß der Linie III/3 in Figur 2 mit dem Winkelbeschlag in der Ruheposition,

Figur 4   die Schnittdarstellung gemäß Figur 3 mit dem Winkelbeschlag in der Gebrauchsposition,

Figur 5   eine Draufsicht auf den Meßbandanfang in einer zweiten Ausführungsform,

Figur 6   eine Draufsicht auf den Meßbandanfang gemäß Figur 5 mit umgeschlagenem Griff,

Figur 7   eine vergrößerte Ansicht des Winkelbeschlages und

Figur 8   eine Seitenansicht des Winkelbeschlages.

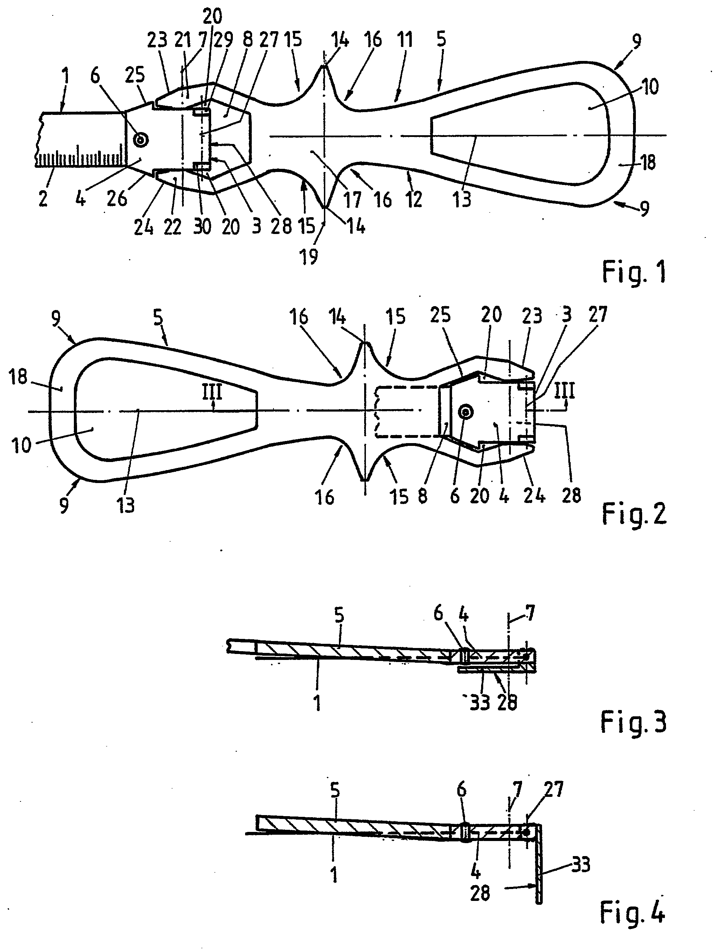

Jedes Meßband besitzt üblicherweise einen Bandstreifen 1, der eine Maßeinteilung 2 trägt, die am Anfang des Bandstreifens 1 mit einer Null-Marke 3 beginnt. Auf dem Anfang des Bandstreifens 1 ist ein Beschlag 4 aufgesetzt, an dem wiederum ein Griff 5 angreift. Der Beschlag 4 kann in verschiedener Weise ausgebildet sein und z. B. aus durchsichtigem Kunststoff bestehen, so daß die Maßeinteilung 2 einschließlich ihrer Null-Marke 3 durch den Beschlag 4 hindurch sichtbar sind. Es ist aber auch möglich, daß der Bandstreifen 1 gar keine Null-Marke 3 trägt, sondern etwas kürzer ausgebildet ist; in diesem Fall ist die Null-Marke 3 auf dem Beschlag 4 angeordnet, wobei es sich versteht, daß der Bandstreifen 1 mit Hilfe einer Vernietung 6 oder einer sonstigen Befestigung so relativ zu dem Beschlag 4 an diesem befestigt ist, daß seine Maßeinteilung 2 die Maßeinteilung mit der Null-Marke 3 auf dem Beschlag 4 fortsetzt bzw. daran anschließt. Der Beschlag 4 besitzt üblicherweise eine Achse 7, die durch Achsstummel am Beschlag 4 oder auch durch eine eingesetzte Achse eingesetzt werden kann, die zugleich in Teile des Griffes 5 einragen. Auf jeden Fall ist der Griff 5 aus der dargestellten Stellung in Bandverlängerungsrichtung um etwas weniger als 180°, vorzugsweise nach beiden Seiten, auf und unter den Bandstreifen 1 herumklappbar, wenn das Meßband für Innenmessungen eingesetzt werden soll, wie dies Figur 2 zeigt.

Der Griff 5 weist an seinem bandseitigen Ende ein Fenster 8 auf, welches einerseits so gestaltet ist, daß bei Außenmessungen durch das Fenster 8 hindurch die Meßstelle beobachtet werden kann. Andererseits besitzt das Fenster 8 eine solche Größe, daß auch in der umgeklappten Stellung des Griffes 5, also für Innenmessungen, der Beschlag 4 innerhalb des Fensters 8 liegt. Beim Umklappen setzt also der Griff 5 nicht auf den Beschlag 4 auf, sondern auf dem Bandstreifen 1. Der Griff 5 besitzt langgestreckte Gestalt. An seinem freien Ende besitzt der Griff 5 eine abgerundete Formgebung 9, mit der er sich in der Handfläche der Hand des Benutzers abstützt. Der Griff 5 kann in diesem Bereich auch eine Durchbrechung 10 aufweisen, um ihn leicht und formschön zu gestalten. Der Griff 5 besitzt zwei Längskanten 11 und 12, die symmetrisch zur Längsachse 13 ausgebildet sind. Im Mittelbereich weisen die Längskanten 11 und 12 Verbreiterungen auf, die die in Figur 1 ersichtliche Formgebung besitzen können. Vor diesen Verbreiterungen 14, dem beschlagseitigen Ende des Griffes 5 zugekehrt, sind im Bereich jeder Längskante 11 und 12 je eine Fingermulde 15 für Außenmessungen vorgesehen. Diese Fingermulden 15 sind etwa um Fingerbreite von der Null-Marke 3 des Beschlages 4 bzw. des Bandstreifens 2 entfernt angeordnet. Auf diese Weise läßt sich der Griff 5 unter Anlage des Daumens und des Zeigefingers in je einer der Fingermulden 15 und unter Abstützung des freien Endes 18 des Griffes 5 in der Handfläche des Benutzers ergreifen. Dieses Ergreifen kann auf zwei verschiedene Arten geschehen. Einmal zeigt die Handfläche des Benutzers nach unten und einmal nach oben. In beiden Fällen findet der Griff 5 gleichsam eine Dreipunktauflagerung in der Hand und ist so stabil aufgenommen, so daß es ohne weiteres möglich ist, die über das Aufrollgerät am anderen Ende des Bandstreifens 1 ausgeübte Zugkraft während der Außenmessung zu kompensieren. Die Fingermulden 15 für Außenmessungen sind im Mittelbereich 17 des Griffes 5 oder genauer gesagt etwas mehr in Richtung auf das beschlagseitige Ende des Griffes 5 zu, angeordnet, und zwar so, daß die Fingermulden 15 etwa um Fingerstärke von der Null-Marke 3 entfernt vorgesehen sind. Dies ergibt die Möglichkeit, beim Messen eines Außenmaßes den Zeigefinger an die Meßstelle anzulegen, wobei noch durch Verschwenken der beiden vorderen Glieder des Zeigefingers die Möglichkeit besteht, den Bandstreifen 1 etwa um 1 oder 2 mm zu verlagern, bis die Null-Marke 3 mit der Meßstelle fluchtet, die durch das Fenster 8 hindurch beobachtet werden kann.

Der Griff 5 weist im Bereich jeder Längskante 11 und 12 aber außerdem noch je eine Fingermulde 16 für Innenmessungen auf, die ebenfalls symmetrisch zu der Längsachse 13 angeordnet und ausgebildet sind. Es versteht sich, daß auch hier der Daumen und der Zeigefinger in diesen Fingermulden 16 abgestützt werden, wenn eine Innenmessung durchgeführt wird. Dabei ist dann der Griff aus seiner in Figur 1 dargestellten Ausgangslage um etwa 180° um die Achse 7 herum verschwenkt und befindet sich somit in der Stellung gemäß Figur 2. Auch bei Innenmessungen findet eine Dreipunktabstützung des Griffes in der Handfläche statt. Es ist auch möglich, die Fingermulden 15 bzw. 16 bezüglich einer Querachse 19 symmetrisch zueinander auszubilden. Unbedingt erforderlich ist dies jedoch nicht.

Das Fenster 8 erstreckt sich von der Null-Marke 3 in Richtung auf das freie Ende 18 des Griffes 5. Es setzt sich außerdem in Freiräumen 20 fort, die gleichsam neben der Null-Marke 3 beginnen und sich um einen gewissen Betrag in den freien Enden 21 und 22, also den Enden, die dem Beschlag 4 zugekehrt sind, fortsetzen. Die Freiräume 20 bilden nicht nur seitlich des Beschlages 4 eines schmalen Spalt, sondern gestatten es, z. B. die Kante des zu messenden Gegenstandes auch in diesem Bereich anzupeilen und mit der Null-Marke in Überdeckung zu bringen.

Der Griff 5 besitzt im Bereich seiner dem Beschlag 4 zugekehrten freien Enden 21 und 22 Abgleitflächen 23 und 24. Der Beschlag 4 besitzt in Zuordnung dazu entsprechende Verbreiterungen, an denen ebenfalls Abgleitflächen 25 und 26 gebildet sind. Die Abgleitflächen 23 und 25 können fluchtend zueinander angeordnet sein. Es ist auch möglich, daß die Abgleitfläche 25 etwas vorsteht. Die Gestaltung des Fensters 8 ist so ausgeführt, daß die Abgleitflächen 25 und 26 im umgeklappten Zustand des Griffes 5 (Figur 2) innerhalb des Umrisses des Fensters 8 liegen. Damit wird es möglich, die Freiräume 20 mit dem Fenster 8 zu verbinden bzw. zu vereinen.

Zusätzlich zu der Achse 5, um die der Griff 5 schwenkbar gelagert ist, ist eine Klappachse 27 am Beschlag 4 vorgesehen, die durch einen Metallbolzen realisiert werden kann. Die Klappachse 27 ist möglichst nahe an der Null-Marke 3 angeordnet und dient zur schwenkbaren Lagerung eines Winkelbeschlages 28, der sich in seiner Ruhestellung im wesentlichen unterhalb von dem Beschlag 4 erstreckt und parallel zu diesem angeordnet ist, wie dies beispielsweise aus Figur 3 ersichtlich ist. Der Winkelbeschlag besitzt Umbiegungen 29 und 30, mit denen er auf der Klappachse 27 um 90° schwenkbar gelagert ist (Figur 4). Um die Freiräume 20 nicht zu verkleinern, ist der Beschlag 4 im Bereich der Null-Marke 3 bzw. der Lagerung des Winkelbeschlages 28 entsprechend ausgenommen, damit die Umbiegungen 29 und 30 hier gelagert werden können. Die Achse 7 ist gegenüber der Null-Marke 3 und vergleichsweise zu der Klappachse 27 sehr viel weiter zurückverlagert angeordnet, um die Anordnung der Abgleitflächen auf den Beschlag 4 und auf die Enden 21 und 22 des Griffes 5 aufzuteilen.

Die Figuren 3 und 4 zeigen Schnittdarstellungen mit dem Winkelbeschlag 28, einmal in der Ruheposition und einmal um 90° ausgeklappt in der Gebrauchsposition. Der Griff 5 kann sich dabei, wie dargestellt, in der umgeschlagenen Stellung gemäß Figur 2 befinden oder in der Stellung gemäß Figur 1. Für die Benutzung des Winkelbeschlages 28 ist dies nicht wesentlich. Auf jeden Fall ist die Anordnung und die Klappmöglichkeit des Winkelbeschlages 28 so gewählt, daß hierdurch das Umschlagen des Griffes 5 in keiner Weise beeinträchtigt wird. Die Klappachse 27 ist so weit von der Achse 7 entfernt angeordnet, daß der Winkelbeschlag 28 nach dem Verschwenken des Griffes 5 um etwa 90° entfernt werden kann, wenn er dem Benutzer des Meßbandes verzichtbar erscheint. Zu diesem Zweck ist es lediglich erforderlich, den Metallbolzen der Klappachse 27 herauszuschlagen und den Winkelbeschlag 28 dann abzunehmen. Die Achse 7 und die Lagerung des Griffes wird damit in keiner Weise beschädigt.

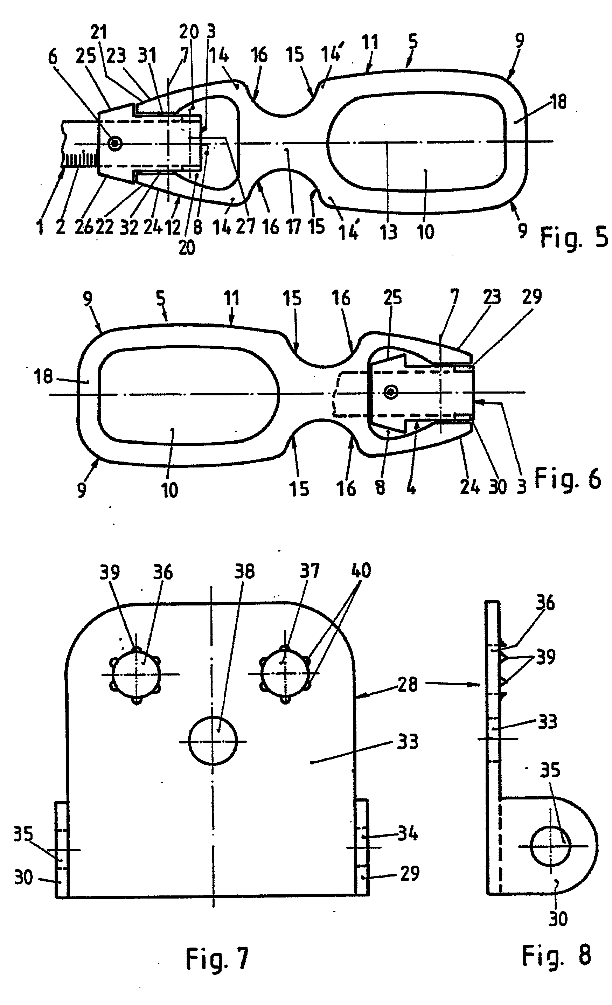

Das in den Figuren 5 und 6 dargestellte Ausführungsbeispiel weist grundsätzlich gleiche oder ähnliche Merkmale wie das Ausführungsbeispiel der Figuren 1 bis 4 auf, weshalb für vergleichbar oder gleiche Merkmale die gleichen Bezugszeichen verwendet sind. Es sind hier zwei Verbreiterungen 14 und 14' vorgesehen, weil die Fingermulden 15 und 16 aneinander anschließend vorgesehen sind. Der Beschlag 4 besitzt hier Achsstummel 31 und 32, mit denen die Lagerung des Griffes 5 realisiert ist. Die Abgleitfläche 25 an dem Beschlag 4 endet dem Griff 5 zugekehrt etwas vorspringend vor dem Beginn der Abgleitfläche 23. Dies ist keiner Weise nachteilig, weil auf diese Art und Weise Hindernisse im Gelände nicht zu einem Festsetzen des Bandanfangs beim Ziehen bzw. beim Aufrollen führen können. Auch hier ist die Gestaltung des Fensters 8 und der anschließenden Freiräume 20 so gewählt, daß die Vorsprünge mit den Abgleitflächen 25 und 26 einerseits innerhalb des Umrisses des Griffes an dieser Stelle aufgenommen werden können, andererseits aber die Kante eines Gegenstandes durch die Freiräume 20 hindurch auch dann angepeilt werden kann, wenn sich diese Kante hinter der Null-Marke 3, also unterhalb des Beschlages 4, befindet.

Die Figuren 7 und 8 verdeutlichen die Ausbildung des Winkelbeschlages 28 im einzelnen. Der Winkelbeschlag 28 besteht aus Metallblech und weist neben seiner im wesentlichen eben gestalteten Hauptfläche 33 die Umbiegungen 29 und 30 auf, die je eine Bohrung 34 und 35 besitzen, durch die sich der Metallbolzen der Klappachse 27 hindurch erstreckt. Der Umriß der Hauptfläche 33 ist abgerundet gestaltet, wobei auf die Bildung von scharfen Kanten bewußt verzichtet wurde, um die Verletzungsgefahr zu mindern. In der Hauptfläche 33 sind randgeschlossene Durchbrechungen 36, 37 und 38 vorgesehen. Die Durchbrechungen 36 und 37 sind in Richtung auf den Beschlag 4 mit vorspringenden Krallen, Spitzen o. dgl. 39, 40 ausgestattet, die sich aus Blechdurchzügen ergeben. Die Durchbrechung 38 weist solche Vorsprünge nicht auf und dient beispielsweise dazu, zur Befestigung des Meßbandanfangs an dem mit einer Außenmessung zu messenden Gegenstand einen Nagel einzuschlagen. Dies hat den Vorteil, daß der Winkelbeschlag 28 auch dann nicht seinen Sitz an dem zu vermessenden Gegenstand verliert, wenn die beim Ausrollen des Meßbandes einwirkende Spannung auf den Winkelbeschlag einmal verlorengeht.

Bezugszeichenliste:

1 = Bandstreifen
2 = Maßeinteilung
3 = Null-Marke
4 = Beschlag
5 = Griff
6 = Vernietung
7 = Achse
8 = Fenster
9 = Formgebung
10 = Durchbrechung
11 = Längskante
12 = Längskante
13 = Längsachse
14 = Verbreiterung
15 = Fingermulde
16 = Findermulde
17 = Mittelbereich

18 = freies Ende
19 = Querachse
20 = Freiraum
21 = freies Ende
22 = freies Ende
23 = Abgleitfläche
24 = Abgleitfläche
25 = Abgleitfläche
26 = Abgleitfläche
27 = Klappachse
28 = Winkelbeschlag
29 = Umbiegung
30 = Umbiegung
31 = Achsstummel
32 = Achsstummel
33 = Hauptfläche
34 = Bohrung
35 = Bohrung
36 = Durchbrechung
37 = Durchbrechung
38 = Durchbrechung
39 = Kralle, Spitze o. dgl.
40 = Kralle, Spitze o. dgl.

**Patentansprüche**

1. Meßband mit einem mit einer Maßeinteilung versehenen Bandstreifen (1), mit einem an dessen Anfang befestigten Beschlag (4), mit am Beschlag angeordneten Abgleitflächen (25, 26) und einem am Beschlag vorgesehenen Griff (5), der an seinem beschlagseitigen Ende ein die Sicht auf die Meßstelle und die Null-Marke (3) am Anfang des Bandstreifens (1) oder des Beschlags (4) gestattendes Fenster (8) aufweist, wobei der Griff (5) aus einer Lage in Bandverlängerungsrichtung mindestens einseitig um etwa 180° um eine Achse (7) schwenkbar am Beschlag (4) gelagert ist, dadurch gekennzeichnet, daß das Fenster (8) im Bereich der Nullmarke (3) durch Freiräume (20) in Bezug auf den Beschlag (4) und den Bandstreifen (1) seitlich verbreitert ist, daß auch der Griff (5) Abgleitflächen (23, 24) aufweist, die die Abgleitflächen (25, 26) am Beschlag (4) ergänzen, und daß ein Winkelbeschlag (28) um eine möglichst nahe am Anfang des Beschlags (4) angeordnete und separat von der Achse (7) des Griffs (5) vorgesehene Klappachse (27) schwenkbar gelagert ist, wobei die Klappachse (27) näher an der Nullmarke (3) angeordnet ist als die Achse (7) des Griffs (5).

2. Meßband nach Anspruch 1, dadurch gekennzeichnet, daß die Freiräume (20) so ausgebildet sind, daß sie im umgeschlagenen Zustand des Griffs (5) Vorsprünge, an denen die beschlagseitigen Abgleitflächen (25, 26) angeordnet sind, aufnehmen,

3. Meßband nach Anspruch 1, dadurch gekennzeichnet, daß die Achse (7) des Griffs (5) von der Null-Marke (3) in Richtung auf den Bandstreifen (1) um etwa 6 mm zurückversetzt angeordnet und in bekannter Weise von Achsstummeln (31, 32) am Beschlag (4) gebildet sind.

4. Meßband nach Anspruch 1 und 2, dadurch gekennzeichnet, daß die Freiräume (20) am Griff (5) sich über den Anfang des Beschlags (4) hinaus seitlich in Richtung auf die Achse (7) erstrecken.

5. Meßband nach Anspruch 1 bis 3, dadurch gekennzeichnet, daß der Beschlag (4) im Bereich der Nullmarke (3) Ausnehmungen aufweist, in denen Umbiegungen (29, 30) des Winkelbeschlags (28) auf der den Beschlag (4) durchsetzenden Klappachse (27) gelagert sind.

6. Meßband nach Anspruch 1 bis 4, dadurch gekennzeichnet, daß der Beschlag (4) und der Griff (5) aus Kunststoff, der Winkelbeschlag (28) und dessen Klappachse aus Metall bestehen.

7. Meßband nach Anspruch 5, dadurch gekennzeichnet, daß der aus Metallblech bestehende Winkelbeschlag (28) nur innerhalb seines Umrisses vorspringende Krallen, Spitzen oder dergleichen (39, 40) aufweist.

**Claims**

1. Measuring tape with a tape strip (1) equipped with a graduation, with a fitting (4) secured to its start, with slide-off faces (25, 26) arranged on the fitting, and with a handle (5) which is provided on the fitting and which, at its end located on the same side as the fitting, possesses an aperture (8) allowing a view of the measuring point and the zero mark (3) at the start of the tape strip (1) or of the fitting (4), the handle (5) being mounted on the fitting (4) so as to be pivot out of a position in the direction of extension of the tape through approximately 180° about an axis (7) at least on one side, characterized in that, in the region of the zero mark (3), the aperture (8) is widened laterally in relation to the fitting (4) and to the tape strip (1) by means of free spaces (20), in that the handle (5) also has slide-off faces (23, 24) which complete the slide-off faces (25, 26) located on the fitting (4), and in that an angular fitting (28) is mounted pivotably about a tilt axle (27) located as near as possible to the start of the fitting (4) and provided separately from the axis (7) of the handle (5), the tilt axle (27) being located nearer to the zero mark (3) than the axis (7) of the handle (5).

2. Measuring tape according to Claim 1, characterized in that the free spaces (20) are designed so that, when the handle (5) is in the folded-round state, they receive projections on which the slide-off faces (25, 26) located on the fitting are arranged.

3. Measuring tape according to Claim 1, characterized in that the axis (7) of the handle (5) is arranged set back by approximately 6 mm from the zero mark (3) in the direction of the tape strip (1) and is formed in a known way by axial stubs (31, 32) located on the fitting (4).

4. Measuring tape according to Claims 1 and 2, characterized in that the free spaces (20) on the handle (5) extend laterally beyond the start of fitting (4) in the direction of the axis (7).

5. Measuring tape according to Claims 1 to 3, characterized in that, in the region of the zero mark (3), the fitting (4) has recesses, in which bent portions (29, 30) of the angular fitting (28) are mounted on the tilt axle (27) passing through the fitting (4).

6. Measuring tape according to Claims 1 to 4, characterized in that the fitting (4) and the handle (5) consist of plastic, and the angular fitting (28) and its tilt axle consist of metal.

7. Measuring tape according to Claim 5, characterized in that the angular fitting (28) consisting of sheet metal possesses claws, spikes or the like (39, 40) projecting only within its contour.

## Revendications

1. Mètre ruban avec un ruban (1) muni d'une graduation de mesure, avec une ferrure (4) fixée à son commencement, avec des surfaces de glissement (25, 26) disposées sur la ferrure, et une poignée (5) prévue sur la ferrure, présentant sur son extrémité du côté de la ferrure une fenêtre (8) permettant de voir l'emplacement de la mesure et le repère de zéro (3) au commencement du ruban (1) ou de la ferrure (4) , la poignée (5) étant montée de manière pivotante sur la ferrure (4) autour d'un axe (7) à partir d'une position dans le sens du prolongement du ruban, au moins d'un côté sur environ 180°, caractérisé en ce que la fenêtre (8) est élargie latéralement dans la région du repère de zéro (3) par rapport à la ferrure (4) et au ruban (1) par des espaces libres (20); en ce que la poignée (5) présente, elle aussi, des surfaces de glissement (23, 24) qui complètent les surfaces de glissement (25, 26) sur la ferrure (4), et en ce qu'une ferrure d'angle (28) est montée de manière pivotante sur un axe de charnière (27) disposé aussi près que possible au commencement de la ferrure (4) et prévu séparément de l'axe (7) de la poignée (5), l'axe de charnière (27) étant disposé plus près du repère de zéro (3) que l'axe (7) de la poignée (5).

2. Mètre ruban selon la revendication 1, caractérisé en ce que les espaces libres (20) sont conformés de telle façon qu'ils reçoivent, dans l'état replié de la poignée (5), des protubérances sur lesquelles sont disposées les surfaces de glissement (25, 26) du côté de la ferrure.

3. Mètre ruban selon la revendication 1, caractérisé en ce que l'axe (7) de la poignée (5) est décalé vers l'arrière d'environ 6 mm à partir du repère de zéro (3) en direction du ruban (1) et est constitué, de manière connue, par des tourillons (31, 32) sur la ferrure (4).

4. Mètre ruban selon les revendications 1 et 2, caractérisé en ce que les espaces libres (20) sur la poignée (5) s'étendent, sur le commencement de la ferrure (4), latéralement vers l'extérieur en direction de l'axe (7).

5. Mètre ruban selon les revendications 1 à 3, caractérisé en ce que la ferrure (4) présente dans la région du repère de zéro (3) des évidements dans lesquels des replis (29, 30) de la ferrure d'angle (28) sont montés sur l'axe de charnière (27) traversant la ferrure (4).

6. Mètre ruban selon les revendications 1 à 4, caractérisé en ce que la ferrure (4) et la poignée (5) sont en matière plastique et la ferrure d'angle (28) et son axe de charnière sont en métal.

7. Mètre ruban selon la revendication 5, caractérisé en ce que la ferrure d'angle (28) constituée de tôle métallique présente, seulement à l'intérieur de son contour, des griffes, des pointes ou éléments similaires (39, 40).

Fig. 1

Fig. 2

Fig. 3

Fig. 4

Fig. 5

Fig. 6

Fig. 7

Fig. 8